(19) Europäisches Patentamt / European Patent Office / Office européen des brevets

(11) **EP 3 658 434 B1**

(12) **FASCICULE DE BREVET EUROPEEN**

(45) Date de publication et mention de la délivrance du brevet:
**04.12.2024 Bulletin 2024/49**

(21) Numéro de dépôt: **18748961.2**

(22) Date de dépôt: **13.06.2018**

(51) Classification Internationale des Brevets (IPC):
**B60W 30/19** (2012.01)      **B60K 6/48** (2007.10)
**B60W 20/30** (2016.01)      **B60W 10/08** (2006.01)
**B60W 10/113** (2012.01)     **B60K 6/547** (2007.10)
**B60W 30/18** (2012.01)

(52) Classification Coopérative des Brevets (CPC):
**B60K 6/48; B60K 6/547; B60W 10/08;**
**B60W 10/113; B60W 20/30; B60W 30/18072;**
**B60W 30/18127; B60W 30/19;** B60K 2006/4816;
B60W 2030/1809; B60W 2520/10;
B60W 2710/1005; B60W 2720/106; Y02T 10/62

(86) Numéro de dépôt international:
**PCT/FR2018/051385**

(87) Numéro de publication internationale:
**WO 2019/020876 (31.01.2019 Gazette 2019/05)**

(54) **PROCÉDÉ DE CONTRÔLE DE CHANGEMENT DE RAPPORTS EN PHASE DE FREINAGE RÉCUPÉRATIF**

VERFAHREN ZUR STEUERUNG VON GANGWECHSELN IN PHASEN VON REGENERATIVEM BREMSEN

METHOD FOR CONTROLLING GEAR CHANGES DURING PHASES OF REGENERATIVE BRAKING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2017 FR 1756991**

(43) Date de publication de la demande:
**03.06.2020 Bulletin 2020/23**

(73) Titulaires:
• **Renault s.a.s**
  **92100 Boulogne Billancourt (FR)**
• **Nissan Motor Co., Ltd.**
  **Yokohama-shi, Kanagawa 221-0023 (JP)**

(72) Inventeur: **LEFEVRE, Aurélien**
  **92340 Bourg-La-Reine (FR)**

(74) Mandataire: **Renault Group**
  **Renault s.a.s.**
  **1 avenue du Golf**
  **FR TCR AVA 055**
  **78084 Guyancourt Cedex (FR)**

(56) Documents cités:
  DE-A1- 102014 013 183      DE-A1- 102015 219 340
  JP-A- 2010 083 454

**Description**

La présente invention se rapporte à la commande des transmissions hybrides, en particulier des transmissions hybrides à double embrayage.

Plus précisément, elle a pour objet un procédé de contrôle des changements de rapports en phase de freinage récupératif, sur les deux arbres d'entrée d'une transmission hybride à double embrayage, transmettant à la roue le couple d'un moteur thermique sous le contrôle du double embrayage, ainsi que le couple d'une machine électrique reliée à la roue par l'un des deux arbres d'entrée, indépendamment du double embrayage.

Cette invention a également pour objet une transmission contrôlant les changements de rapport en mode de freinage récupératif, et un groupe motopropulseur comportant une telle transmission.

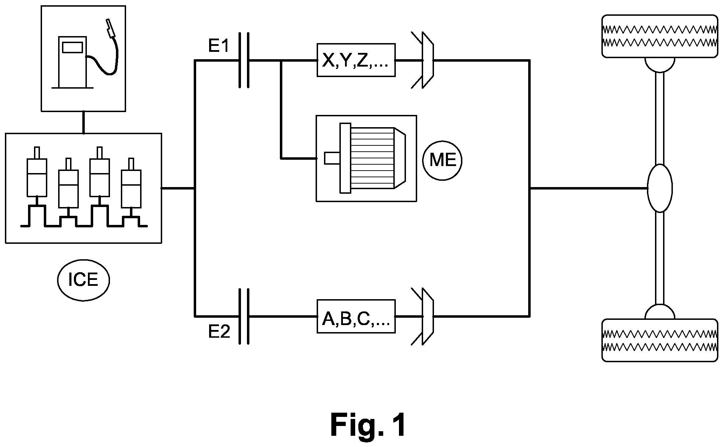

Une transmission à double embrayage, de type DCT (pour « *Dual Clutch Transmission* ») hybride, permet d'optimiser la consommation et l'émission de polluants d'un véhicule pendant certaines phases de conduite du véhicule par l'utilisation d'une puissance électrique au travers d'une machine électrique, reliée en permanence aux roues du véhicule, selon le schéma de la figure 1.

Cette transmission a deux arbres d'entrée et deux embrayages E1, E2. La machine électrique ME, est alimentée par une batterie qui se recharge principalement lors des phases de décélération où le moteur thermique ICE est éteint, et non relié aux roues, alors que la machine électrique est reliée aux roues. La machine électrique ME fonctionne alors en « mode génératrice », où elle transforme l'énergie cinétique du véhicule, en énergie électrique. Lors de ces phases de décélération, des changements de rapports de transmission sont requis, afin de placer la machine électrique sur sa plage optimale d'utilisation, en rendement, pour le couple minimal réalisable, etc.).

Au cours des changements de rapports en décélération, la machine électrique est temporairement découplée des roues, et ne récupère plus l'énergie cinétique du véhicule. Le moteur thermique étant également découplé des roues, aucun couple négatif, ou frein moteur, ne peut être réalisé. La disparition temporaire du frein moteur pose un problème important d'agrément de conduite pour les usagers du véhicule.

La perte temporaire de frein moteur qui est causée par le découplage temporaire de la machine électrique et des roues, lors des phases de changement de rapport (X, Y, Z...) en décélération sur l'arbre d'entrée de la transmission relié à la machine électrique ME. Elle peut être compensée dans une certaine mesure, par la mise en frottement de l'embrayage associé à l'autre l'arbre d'entrée de la transmission. Lorsqu'un rapport (A, B, C, ...) est engagé sur cet arbre, la résistance du moteur thermique à sa mise en rotation, crée alors un couple négatif transmis aux roues par la fermeture même partielle de son embrayage.

Afin de limiter la perte de décélération du véhicule en utilisant la résistance à la mise en rotation du moteur thermique, au travers de l'arbre d'entrée de la transmission non relié à la machine électrique et de son embrayage, le choix du rapport sur cet arbre a toute son importance.

Par la publication DE 10 2015 219 340, on connaît une méthode de changement de rapports dans une transmission à double embrayage reliant une machine électrique aux roues indépendamment de l'état des embrayages, dans laquelle on compense la perte de décélération occasionnée par l'ouverture de l'embrayage disposé sur un arbre de transmission reliant la machine électrique aux roues, en faisant frotter les embrayages de la transmission.

La présente invention vise à sélectionner le rapport optimal pour compenser la perte de frein moteur dans les phases de décélérations sur un véhicule équipé d'une boîte de vitesses de type DCT hybride, avec une machine électrique reliée à l'un des arbres primaires.

Dans ce but, elle propose un procédé de contrôle des changements de rapports en phase de freinage récupératif selon la revendication 1, une transmission hybride à double embrayage selon la revendication 5 et un groupe motopropulseur hybride selon la revendication 6.

La présente invention sera mieux comprise à la lecture de la description suivante d'un mode de réalisation non limitatif de celle-ci, en se reportant aux dessins annexés, sur lesquels :

- la figure 1 est un schéma d'architecture simplifiée illustrant le type de transmission concerné par l'invention,
- la figure 2 est un logigramme de la stratégie proposée, et
- la figure 3 illustre le fonctionnement de cette stratégie.

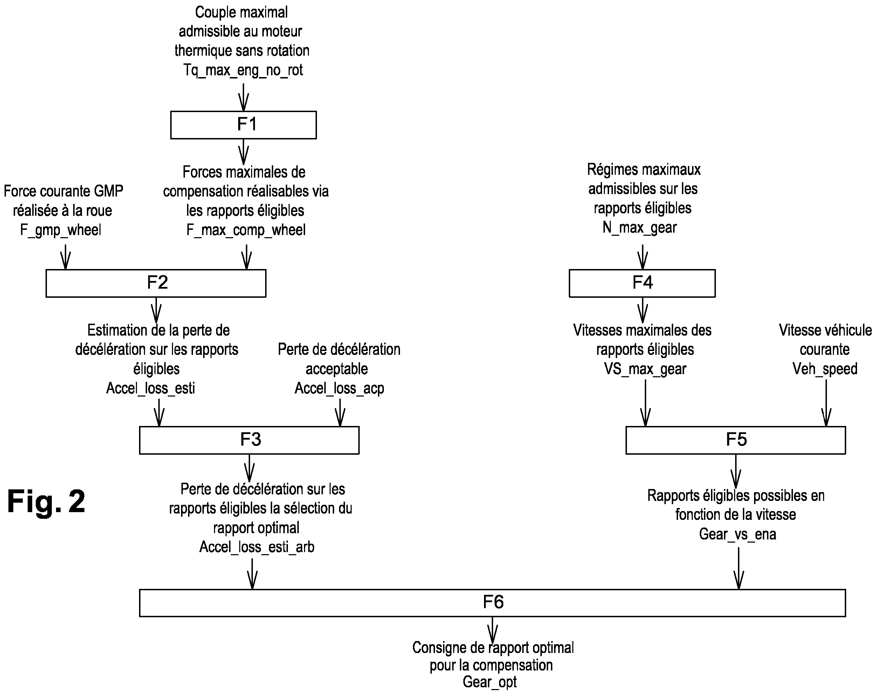

La stratégie résumée sur la figure 2 se décompose en plusieurs étapes conduisant au choix du rapport de transmission optimal, pour compenser la perte de frein moteur lors des phases de décélération. Elle n'est applicable que si le moteur thermique est coupé. Dans la description qui suit, on appelle « rapports éligibles » l'ensemble des rapports de la transmission se trouvant sur l'arbre primaire qui n'est pas relié à la machine électrique.

La première étape F1 consiste à définir les forces maximales de compensation réalisables sur les rapports éligibles *F_max_comp_wheel.* Le couple maximal admissible au moteur thermique *Tq_max_eng_no_rot* correspond au couple qu'il est possible d'appliquer au niveau du vilebrequin, par le frottement de l'embrayage sans mettre en rotation le moteur thermique. Ce couple varie principalement en fonction de la température d'huile du moteur thermique. Une huile froide implique un couple maximal admissible plus élevé qu'une huile chaude. Sa valeur est déterminée par une fonction logicielle dédiée. Elle est transmise à la transmission, pour compenser la perte de frein moteur. Les forces maximales de compensation obtenues *F_max_comp_wheel,* correspondent aux forces à la roue provoquées par le frottement de l'embrayage placé sur l'arbre primaire qui n'est pas relié à la machine électrique. Elles sont fonction des rapports éligibles, et des démultiplications qui leur sont associées, selon la formule :

*F_max_comp_wheel = (Tg_max_eng_no_rot X Démultiplications totales des rapports éligibles) / Rayon de roue du véhicule.*

La seconde étape F2 consiste à estimer les pertes de décélération *Accel_loss_esti,* dues à un changement de rapport de la machine électrique dans les phases de décélération. Ces valeurs sont calculées à partir des forces maximales de compensations réalisables sur les rapports éligibles *F_max_comp_wheel* calculées à l'étape F1, et de la force *F_gmp_wheel,* réalisée par le groupe motopropulseur (GMP) avec la seule machine électrique :

*Accel_loss_esti = (F_gmp_wheel + F_max_comp_wheel) /Masse du véhicule.*

La troisième étape F3 consiste à calculer les pertes de décélération *Accel_loss_esti_arb* qui servent à établir la consigne de rapport optimal de compensation dans l'étape F6. Dans cette étape un écart de variation de décélération *Accel_loss_acp* est ajouté aux pertes de décélération *Accel_loss_esti* obtenues à l'étape F2. L'écart de réglage logiciel *Accel_loss_acp* correspond physiquement à la variation de décélération que les usagers peuvent supporter en termes d'agrément, lors d'une phase de changement de rapport de la machine électrique en décélération :

$$Accel\_loss\_esti\_arb = Accel\_loss\_esti - Accel\_loss\_acp$$

La quatrième étape F4 consiste à déterminer les vitesses maximales possibles *VS_max_gear* pour la sélection des rapports éligibles en fonction des régimes maximaux autorisées sur les rapports éligibles *N_max_gear,* pour mettre à l'abri les composants de la transmission (paliers, roulements, etc.), de surrégimes qui provoqueraient des dégâts mécaniques. Ces vitesses sont celles au-delà desquelles, un rapport éligible ne peut pas être sélectionné comme rapport optimal de compensation :

*VS_max_gear = N_max_gear X Démultiplications totale des rapports éligibles X 3.6 X PI/30 X Rayon de roue.*

La cinquième étape F5 consiste à déterminer les rapports éligibles possibles *Gear_vs_ena* en fonction de la vitesse véhicule courante *Veh_speed* et des vitesses maximales possibles des rapports éligibles *VS_max_gear* calculées dans l'étape F4. Les rapports sont admissibles si la vitesse du véhicule *Veh_speed* est inférieure aux vitesses maximales possibles *Vs_max_gear.*

La sixième étape F6 consiste à sélectionner le rapport optimal pour la compensation de la perte de décélération *Gear_opt.* A ce stade, seuls les rapports éligibles possibles *Gear_vs_ena,* en fonction de la vitesse du véhicule, sont pris en considération.

- si plusieurs rapports admissibles *Gear_vs_ena* entraînent une perte de décélération supérieure à zéro (impliquant que la compensation sera complète), le rapport ayant la démultiplication la moins élevée est sélectionné,
- si un seul rapport éligible dans la liste *Gear_vs_ena* entraîne une perte de décélération supérieure à zéro, ce rapport est sélectionné.
- si aucun rapport admissible *Gear_vs_ena* n'entraîne une perte d'accélération supérieure à zéro (impliquant que la compensation ne pourra être que partielle), le rapport ayant la démultiplication la plus élevée est sélectionné.

Le rapport *Gear_opt* sélectionné peut alors être envoyé à la transmission, qui prend en charge la compensation lors du changement de rapport, engageant des rapports sur chaque, et en faisant frotter les embrayages pour réaliser le couple nécessaire à la compensation, en fonction du rapport de compensation sélectionné *Gear_opt* et du couple maximal admissible au moteur thermique sans rotation *Tq_max_eng_no_rot.*

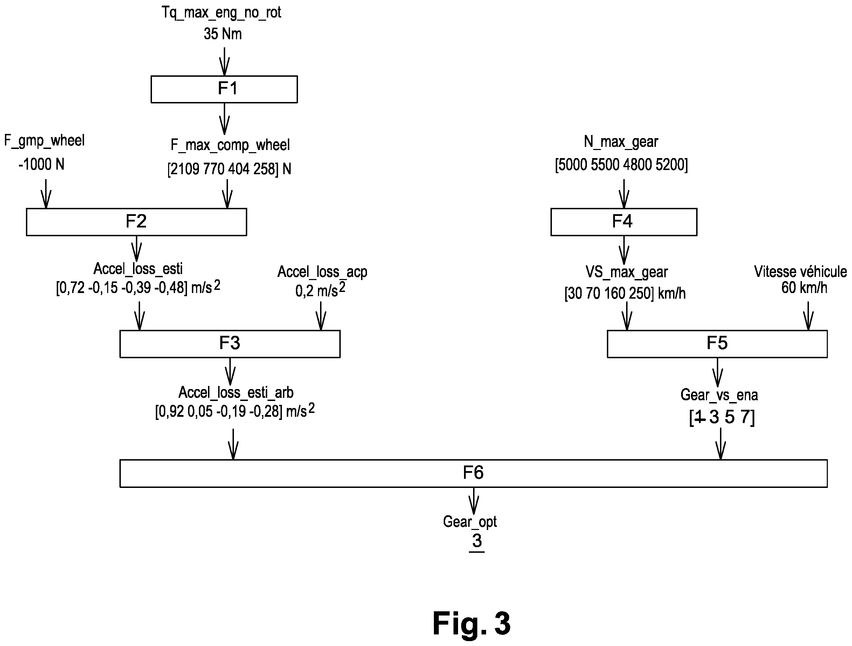

Cette stratégie est illustrée sur la figure 3 par un exemple, dans le cas d'un véhicule doté d'une transmission à sept rapports, dont les rapports 1, 3, 5 et 7 se situent sur l'arbre n'étant pas relié à la machine électrique et les rapports 2, 4 et 6 sur l'arbre relié à la machine électrique.

Dans cet exemple, le couple maximal admissible au moteur thermique sans mise en rotation *Tq_max_eng_no_rot* a une valeur de 35 Nm.

L'étape F1 permet de connaître la force de compensation réalisable à la roue par frottement de l'embrayage de l'arbre non relié à la machine électrique *F_max_comp_wheel* pour chacun des rapports éligibles à partir de cette valeur (*Tq_max_eng_no_rot* = 35 Nm) :

- 2109 N en rapport 1
- 770 N en rapport 3
- 404 N en rapport 5
- 258 N en rapport 7.

A l'étape F2, on estime la perte de décélération pendant le changement de rapport de la machine électrique pour chacun des rapports de compensation éligibles à partir des valeurs précédentes *F_max_comp_wheel* et de la force réalisée à la roue par la machine électrique *F_gmp_wheel,* d'une valeur de -1000 N. Cette perte est de :

- 0,72 m/s$^2$ en rapport 1
- - 0,15 m/s$^2$ en rapport 3
- - 0,39 m/s$^2$ en rapport 5
- - 0,48 m/s$^2$ en rapport 7.

L'étape F3 détermine les valeurs de perte de décélération *Accel_loss_esti_arb* utilisées pour sélectionner le rapport optimal de compensation, à partir de l'estimation des pertes de décélération sur chacun des rapports *Accel_loss_esti,* et du niveau d'acceptabilité de perte de décélération *Accel_loss_acp* :

- 0,92 m/s$^2$ en rapport 1
- 0,05 m/s$^2$ en rapport 3
- - 0,19 m/s$^2$ en rapport 5
- - 0,28 m/s$^2$ en rapport 7.

Les vitesses véhicule maximales *VS_max_gear* pour autoriser les rapports de compensations à partir des régimes maximaux autorisés sur le moteur thermique *N_max_gear* pour chacun des rapports de compensation possibles, sont déterminées à l'étape F4 : *N_max_gear* =

- 5000 tours/minutes en rapport 1
- 5500 tours/minutes en rapport 3
- 4800 tours/minutes en rapport 5
- 5200 tours/minutes en rapport 7.

D'où l'on tire les vitesses maximales *VS_max_gear* =

- 30 km/h en rapport 1
- 70 km/h en rapport 3
- 160 km/h en rapport 5
- 250 km/h en rapport 7

L'étape F5 passe aux rapports éligibles possibles *Gear_vs_ena,* en fonction de la vitesse du véhicule *Veh_speed* (60 km/h) et des vitesses maximales *VS_max_gear* autorisées sur chacun des rapports éligibles :

- rapport 1 non disponible car *Veh_speed* > 30 km/h
- rapport 3, 5 et 7 disponibles car *Veh_speed* < [70 160 250] km/h.

Le rapport optimal de compensation *Gear_opt* est obtenu à l'étape F6 : parmi l'ensemble des rapports éligibles possibles *Gear_vs_ena,* seul le rapport 3 possède une valeur de perte de décélération *Accel_loss_esti_arb* supérieure à 0. Il est donc adopté comme rapport optimal de compensation.

La transmission hybride à double embrayage est proposée par l'invention comporte deux arbres d'entrée transmettant à la roue le couple d'un moteur thermique sous le contrôle du double embrayage, ainsi que le couple d'une machine électrique reliée à la roue par l'un des deux arbres d'entrée indépendamment du double embrayage. Sur cette transmission, la perte de décélération du véhicule due à l'interruption du couple transmis par la machine électrique pendant un changement de rapport sur l'arbre qui la relie aux roues, est compensée conformément à la méthode décrite cidessus.

Le groupe motopropulseur (GMP) hybride faisant également l'objet de l'invention comporte un moteur thermique et une machine électrique, dont les couples respectifs sont transmis à la roue par une telle transmission.

## Revendications

1. Procédé de contrôle des changements de rapports en phase de freinage récupératif, sur les deux arbres d'entrée d'une transmission hybride à double embrayage, transmettant aux roues le couple d'un moteur thermique sous le contrôle du double embrayage, ainsi que le couple d'une machine électrique reliée aux roues par l'un des deux arbres d'entrée indépendamment du double embrayage, dans lequel la perte de décélération du véhicule en phase de freinage récupératif avec le moteur coupé, due à l'interruption du couple transmis par la machine électrique pendant un changement de rapport sur l'arbre qui la relie aux roues, est compensée en faisant frotter les embrayages de la transmission, **caractérisé en ce qu'**on sélectionne sur l'autre arbre d'entrée un rapport optimal pour cette compensation (*Gear_opt*), en fonction de la perte de décélération (*Accel_loss_esti_arb*) estimée sur les rapports qui sont éligibles sur cet autre arbre, **en ce que** le rapport optimal est sélectionné parmi des rapports (*Gear_vs_ena*) éligibles, qui sont possibles en fonction de la vitesse du véhicule, **en ce que** les rapports éligibles qui sont possibles *(Gear_vs_ena),* sont déterminés en fonction de la vitesse courante du véhicule *(Veh_speed)* et des vitesses maximales possibles **(Vs_max_gear)** des rapports éligibles et **en ce que** la perte de décélération due aux changements de rapport sur l'arbre d'entrée qui relie la machine électrique aux roues (*Accel_loss_esti*) est calculée à partir des forces maximales de compensation réalisables par frottement sur les rapports éligibles (*F_max_comp_wheel*) et de la force fournie aux roues par la transmission (*F_gmp_wheel*), à partir de la machine électrique.

2. Procédé de contrôle de changements de rapports selon la revendication 1 , **caractérisé en ce que** la perte de décélération (*Accel_loss_esti_arb*) sur les rapports éligibles est la somme d'une perte de décélération due aux changements de rapport sur l'arbre d'entrée qui relie la machine électrique aux roues(*Accel_loss_esti*) et d'un écart (*Accel_loss_acp*) représentant une perte de décélération acceptable pour l'utilisateur.

3. Procédé de contrôle de changements de rapports selon l'une des revendications précédentes, **caractérisé en ce que** les vitesses maximales possibles **(Vs_max_gear)** des rapports éligibles sont déterminées en fonction des régimes maximaux sur ces rapports (*N_max_gear*) permettant de protéger les composants la transmission.

4. Procédé de contrôle de changements de rapports selon l'une des revendications précédentes, **caractérisé en ce que** les forces maximales de compensation réalisables sur les rapports éligibles (*F_max_comp_wheel*) sont calculées à partir du couple maximal qu'il est possible d'appliquer au niveau du vilebrequin sans mettre en rotation le moteur thermique (*Tq_max_eng_no_rot*).

5. Transmission hybride à double embrayage et deux arbres d'entrée transmettant aux roues le couple d'un moteur thermique sous le contrôle du double embrayage, ainsi que le couple d'une machine électrique reliée aux roues par l'un des deux arbres d'entrée indépendamment du double embrayage, dans laquelle la perte de décélération du véhicule en phase de freinage récupératif avec le moteur coupé, due à l'interruption du couple transmis par la machine électrique pendant un changement de rapport sur l'arbre qui la relie aux roues, est compensée grâce au frottement des embrayages de la transmission et à la sélection d'un rapport (*Gear_opt*) sur l'autre arbre d'entrée, **caractérisée en ce que** le rapport sélectionné sur l'autre arbre d'entrée est le rapport optimal pour cette compensation en fonction de la perte de décélération (*Accel_loss_esti_arb*) estimée sur les rapports qui sont éligibles sur celui-ci, **en ce que** le rapport optimal est sélectionné parmi des rapports *(Gear_vs_ena)* éligibles, qui sont possibles en fonction de la vitesse du véhicule, **en ce que** les rapports éligibles qui sont possibles **(Gear_vs_ena),** sont déterminés en fonction de la vitesse courante du véhicule **(Veh_speed)** et des vitesses maximales possibles **(*Vs_max_geari*** des rapports éligibles et **en ce que** la perte de décélération due aux changements de rapport sur l'arbre d'entrée qui relie la machine électrique aux roues (*Accel_loss_esti*) est calculée à partir des forces maximales de compensation réalisables par frottement sur les rapports éligibles (*F_max_comp_wheel*) et de la force fournie aux roues par la transmission (*F_gmp_wheel*), à partir de la machine électrique.

6. Groupe motopropulseur hybride comportant un moteur thermique et une machine électrique, **caractérisé en ce que** leurs couples sont transmis aux roues par une transmission conforme à la revendication 5.

**Patentansprüche**

1. Verfahren zum Steuern von Gangwechseln in einer Phase eines regenerativen Bremsens an den zwei Eingangswellen eines Doppelkupplungs-Hybridgetriebes, wobei das Drehmoment eines Verbrennungsmotors unter der Steuerung der Doppelkupplung sowie das Drehmoment einer elektrischen Maschine, die unabhängig von der Doppelkupplung durch eine der zwei Eingangswellen mit den Rädern verbunden ist, auf die Räder übertragen wird, wobei der Verzögerungsverlust des Fahrzeugs in der Phase des regenerativen Bremsens mit dem ausgeschalteten Motor aufgrund der Unterbrechung des durch die elektrische Maschine übertragenen Drehmoments während eines Gangwechsels an der Welle, die sie mit den Rädern verbindet, bei Reiben der Getriebekupplungen ausgeglichen wird, **dadurch gekennzeichnet, dass** auf der anderen Eingangswelle ein optimaler Gang für diesen Ausgleich (*Gear_opt*), abhängig von dem geschätzten Verzögerungsverlust (*Accel_loss_esti_arb*) der Gänge, die an dieser anderen Welle geeignet sind, gewählt wird, **dass** der optimale Gang unter den geeigneten Gängen (*Gear_vs_ena*) ausgewählt wird, die abhängig von der Geschwindigkeit des Fahrzeugs möglich sind, **dass** die geeigneten Gänge, die möglich sind (*Gear_vs_ena*), abhängig von der aktuellen Geschwindigkeit des Fahrzeugs (*Veh_speed*) und den maximalen möglichen Geschwindigkeiten (*Vs_max_gear*) der geeigneten Gänge bestimmt werden, und dass der Verzögerungsverlust aufgrund von Gangwechseln an der Eingangswelle, die die elektrische Maschine mit den Rädern (*Accel_loss_esti*) verbindet, aus den maximalen erreichbaren Ausgleichskräften durch Reibung an den geeigneten Gängen (*F_max_comp_wheel*) und der durch das Getriebe (*F_gmp_wheel*) auf die Räder ausgeübten Kraft von der elektrischen Maschine errechnet wird.

2. Verfahren zum Steuern von Gangwechseln nach Anspruch 1, **dadurch gekennzeichnet, dass** der Verzögerungsverlust (*Accel_loss_esti_arb*) an den geeigneten Gängen die Summe eines Verzögerungsverlusts aufgrund von Gangwechseln an der Eingangswelle ist, die die elektrische Maschine mit den Rädern (*Accel_loss_esti*) verbindet, und einer Abweichung (*Accel_loss_acp*) ist, die einen für den Benutzer akzeptablen Verzögerungsverlust darstellt.

3. Verfahren zum Steuern von Gangwechseln nach einem der vorstehenden Ansprüche, **dadurch gekennzeichnet, dass** die maximalen möglichen Geschwindigkeiten (*Vs_max_gear*) der geeigneten Gänge abhängig von den maximalen Drehzahlen an diesen Gängen (*N_max_gear*) bestimmt werden, wobei das Schützen der Getriebekomponenten ermöglicht wird.

4. Verfahren zum Steuern von Gangwechseln nach einem der vorstehenden Ansprüche, **dadurch gekennzeichnet, dass** die maximalen erreichbaren Ausgleichskräfte an den geeigneten Gängen (*F_max_comp_wheel*) aus dem maximalen Drehmoment berechnet werden, das auf die Kurbelwelle ausgeübt werden kann, ohne dass der Verbrennungsmotor (*Tq_max_eng_no_rot*) in Drehung versetzt wird.

5. Doppelkupplungs-Hybridgetriebe und zwei Eingangswellen, die das Drehmoment eines Verbrennungsmotors unter der Steuerung der Doppelkupplung sowie das Drehmoment einer elektrischen Maschine, die unabhängig von der Doppelkupplung durch eine der zwei Eingangswellen mit den Rädern verbunden ist, auf die Räder übertragen wird, wobei der Verzögerungsverlust des Fahrzeugs in der Phase des regenerativen Bremsens mit dem ausgeschalteten Motor aufgrund der Unterbrechung des durch die elektrische Maschine übertragenen Drehmoments während eines Gangwechsels an der Welle, die sie mit den Rädern verbindet, dank Reiben der Getriebekupplungen und der Auswahl eines Gangs (*Gear_opt*) an der anderen Eingangswelle ausgeglichen wird, **dadurch gekennzeichnet, dass** der an der anderen Eingangswelle ausgewählte Gang der optimale Gang für diesen Ausgleich abhängig von dem geschätzten Verzögerungsverlust (*Accel_loss_esti_arb*) an den Gängen ist, die an dieser geeignet sind, **dass** der optimale Gang unter den geeigneten Gängen (*Gear_vs_ena*) gewählt wird, die abhängig von der Geschwindigkeit des Fahrzeugs möglich sind, **dass** die geeigneten Gänge, die möglich sind (*Gear_vs-_ena*), abhängig von der aktuellen Geschwindigkeit des Fahrzeugs (*Veh_speed*) und den maximalen möglichen Geschwindigkeiten (*Vs_max_gear*) der geeigneten Gänge bestimmt werden, und dass der Verzögerungsverlust aufgrund von Gangwechseln an der Eingangswelle, die die elektrische Maschine mit den Rädern (*Accel_loss_esti*) verbindet, aus den maximalen erreichbaren Ausgleichskräften durch Reibung an den geeigneten Gängen (*F_max_comp_wheel*) und der durch das Getriebe (*F_gmp_wheel*) auf die Räder ausgeübten Kraft von der elektrischen Maschine errechnet wird.

6. Hybridantriebsstrang, aufweisend einen Verbrennungsmotor und eine elektrische Maschine, **dadurch gekennzeichnet, dass** ihre Drehmomente durch ein Getriebe nach Anspruch 5 auf die Räder übertragen werden.

**Claims**

1. Method for controlling gear changes during a regenerative braking phase, on the two input shafts of a hybrid dual clutch transmission, transmitting to the wheels the torque of a heat engine under the control of the dual clutch, and the torque of an electric machine connected to the wheels by one of the two input shafts independently of the dual clutch, in which the loss of vehicle deceleration in the regenerative braking phase with the engine switched off, due to the interruption of the torque transmitted by the electric machine during a gear change on the shaft connecting the electric machine to the wheels, is compensated for by causing friction between the clutches of the transmission, **characterized in that** an optimum gear for this compensation (*Gear_opt*) is selected on the other input shaft based on the estimated loss of deceleration (*Accel_loss_esti_arb*) on the gears which are eligible on this other shaft, **in that** the optimum gear is selected from eligible gears (*Gear_vs_ena*) which are possible based on the vehicle speed, **in that** the eligible gears which are possible *(Gear_vs_ena)* are determined according to the current vehicle speed *(Veh_speed)* and the maximum possible speeds **(Vs_max_gear)** of the eligible gears, **and in that** the loss of deceleration due to the gear changes on the input shaft connecting the electric machine to the wheels *(Accel_loss_esti)* is calculated from the maximum compensating forces achievable by friction on the eligible gears *(F_max_comp_wheel)* and the force supplied to the wheels by the transmission (*F_gmp_wheel*) from the electric machine.

2. Method for controlling gear changes according to claim 1,
**characterized in that** the loss of deceleration (*Accel_loss_esti_arb)* on the eligible gears is the sum of a loss of deceleration due to the gear changes on the input shaft which connects the electric machine to the wheels *(Accel_loss_esti)* and a deviation *(Accel_loss_acp)* representing a loss of deceleration acceptable to the user.

3. Method for controlling gear changes according to either of the preceding claims, **characterized in that** the maximum possible speeds **(Vs_max_gear)** of the eligible gears are determined based on the maximum speeds on these gears *(N_max_gear)* that enable the components of the transmission to be protected.

4. Method for controlling gear changes according to any of the preceding claims, **characterized in that** the maximum compensation forces achievable on the eligible gears *(F_max_comp_wheel)* are calculated from the maximum torque that can be applied to the crankshaft without rotating the heat engine *(Tq_max_eng_no_rot).*

5. Hybrid dual clutch transmission with two input shafts transmitting to the wheels the torque of a heat engine under the control of the dual clutch, and the torque of an electric machine connected to the wheels by one of the two input shafts independently of the dual clutch, in which the loss of vehicle deceleration in the regenerative braking phase with the engine switched off, due to the interruption of the torque transmitted by the electric machine during a gear change on the shaft connecting the electric machine to the wheels, is compensated for by virtue of the friction of the transmission clutches and the selection of a gear (*Gear_opt*) on the other input shaft, **characterized in that** the gear selected on the other input shaft is the optimum gear for this compensation based on the estimated loss of deceleration (*Accel_loss_esti_arb*) on the gears which are eligible on said shaft, **in that** the optimum gear is selected from eligible gears (*Gear_vs_ena*) which are possible based on the vehicle speed, **in that** the eligible gears which are possible *(Gear_vs_ena)* are determined based on the current vehicle speed *(Veh_speed)* and the maximum possible speeds *(Vs_max_gear)* of the eligible gears, **and in that** the loss of deceleration due to the gear changes on the input shaft connecting the electric machine to the wheels (*Accel_loss_esti*) is calculated from the maximum compensating forces achievable by friction on the eligible gears *(F_max_comp_wheel)* and the force supplied to the wheels by the transmission *(F_gmp_wheel)* from the electric machine.

6. Hybrid powertrain comprising a heat engine and an electric machine, **characterized in that** the torques thereof are transmitted to the wheels by a transmission according to claim 5.

Fig. 1

Couple maximal
admissible au moteur
thermique sans rotation
Tq_max_eng_no_rot

⤋

| F1 |

⤋

Forces maximales de
compensation réalisables via
les rapports éligibles
F_max_comp_wheel

Force courante GMP
réalisée à la roue
F_gmp_wheel

⤋                    ⤋

| F2 |

⤋

Estimation de la perte de
décélération sur les rapports
éligibles
Accel_loss_esti

Perte de décélération
acceptable
Accel_loss_acp

⤋                    ⤋

| F3 |

⤋

Perte de décélération sur les
rapports éligibles la sélection du
rapport optimal
Accel_loss_esti_arb

Régimes maximaux
admissibles sur les
rapports éligibles
N_max_gear

⤋

| F4 |

⤋

Vitesses maximales des
rapports éligibles
VS_max_gear

Vitesse véhicule
courante
Veh_speed

⤋                    ⤋

| F5 |

⤋

Rapports éligibles possibles en
fonction de la vitesse
Gear_vs_ena

**Fig. 2**

| F6 |

⤋

Consigne de rapport optimal
pour la compensation
Gear_opt

Tq_max_eng_no_rot
35 Nm

F1

F_gmp_wheel
-1000 N

F_max_comp_wheel
[2109 770 404 258] N

N_max_gear
[5000 5500 4800 5200]

F2

F4

Accel_loss_esti
[0,72 -0,15 -0,39 -0,48] m/s$^2$

Accel_loss_acp
0,2 m/s$^2$

VS_max_gear
[30 70 160 250] km/h

Vitesse véhicule
60 km/h

F3

F5

Accel_loss_esti_arb
[0,92 0,05 -0,19 -0,28] m/s$^2$

Gear_vs_ena
[1 3 5 7]

F6

Gear_opt
3

**Fig. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102015219340